Europäisches Patentamt

European Patent Office

Office européen des brevets

(11) Publication number: **0 355 931**

**A1**

## EUROPEAN PATENT APPLICATION

(21) Application number: 89202136.1

(22) Date of filing: 24.08.89

(51) Int. Cl.⁴: **F16F 15/04** , **F16F 15/00** , **F16M 7/00**

(30) Priority: 25.08.88 NL 8802097

(43) Date of publication of application:
28.02.90 Bulletin 90/09

(84) Designated Contracting States:
AT BE CH DE ES FR GB GR IT LI LU NL SE

(71) Applicant: **KONINKLIJKE BAKKER RUBBERFABRIEK B.V.**
**Kerkweg 1-B**
**NL-2985 AM Ridderkerk(NL)**

(72) Inventor: **Jansen, Arie**
**Gaardedreef 33**
**NL-2723 AK Zoetermeer(NL)**

(74) Representative: **Smulders, Theodorus A.H.J., Ir. et al**
**Vereenigde Octrooibureaux Nieuwe Parklaan 107**
**NL-2587 BP 's-Gravenhage(NL)**

(54) **Spring system.**

(57) A spring system for resiliently supporting a mass (21) to be subjected to loads relative to a base plate (1). The system comprises a resilient support member (11) movable between the base plate (1) and the mass, which support member (11) has an upper end movably coupled to the mass (21). The bottom end of the resilient support member (11), located oposite the upper end and facing the base plate (1) is omnidirectionally pivotable about its centre line by means of a pivot (22) which is fixed relative to the base plate (1). Resilient centring means (3) are provided to cooperate with the resilient support member (11) for radially supporting the resilient support member (11) relative to its fixed pivot (22).

FIG.1

## Spring system

This invention relates to a spring system for resiliently supporting a load, for example a mass to be subjected to a shock load, relative to a base plate.

In order to be able to absorb a shock load, the spring system should be able to undergo relatively large displacements relative to the base plate in all directions, i.e., omnidirectionally. Desirably, the spring system should be arranged so that the acceleration forces acting on the mass are reduced to acceptable values, and further be operative to ensure that, after the shock load, the spring system returns to its starting position as accurately as possible.

A spring system of this kind for omnidirectionally absorbing a shock load is known, for example, from Netherlands patent application 82 03630, and comprises a cylindrical housing mounted on a base plate, an annular member being arranged at the top of said housing, which member is bounded on its inside by a spherical segment serving to guide a complementary spherical segment in the form of a spherical cap, and having a central opening fixedly mounting a sleeve-like housing forming part of a resilient element under pressure, which is coupled to the mass. The spherical cap is held in position in the annular member by pre-compressed resilient means arranged between the spherical cap and annular element, on the one hand, and the base plate, on the other.

As a result of a shock load, due to the radial component thereof, the support member which is guided with its complementary spherical segment along the guiding spherical segment of the annular element, will be going to tilt, and subsequently, when the shock load is removed, will return to its starting position.

One disadvantage of such a spherical construction is that a great deal of grinding work must be performed. In addition, this grinding work must be done with great accuracy in order that the spherical surfaces may properly slide along each other, and, in particular, for the accurate repositioning after the shock load. Such grinding work is expensive.

A further disadvantage is that the relatively sharp edge of the complementary spherical segment of the support member comes to project from under the surface of the annular element during the tilting of the support surface, and, as a result of the shock load on the masss, this sharp edge will strike the subjacent resilient means, which may cause plastic deformations, in turn resulting in scratches in the spherical surface of the annular element, as a consequence of which the spherical surfaces will fail to slide properly relatively to each other, and may jeopardize accurate return into the starting position. Consequently frequent shock loads will wear the spring system relatively rapidly, making the same unreliable.

Another disadvantage is that the resilient means must be capable of absorbing both the axial and the radial impact load components, and also carry the weight of the mass being supported, as a consequence of which these resilient means are of relatively heavy construction and accordingly contribute to a relatively bulky and heavy spring system.

A further problem is that the resilient means under the spherical cap must only be compressed upon radial shock loads, while for axial shock loads they must have such a pre-compression that the resilient means in the sleeve-like housing extending through the spherical structure will function only. As a consequence, an independent control of the axially and radially acting acceleration components on the mass becomes extremely difficult.

Still another disadvantage is that there is no provision for adjusting - after assembly - the pre-compression component in the spring system in the radial direction, i.e., against the tilting direction of the support member, for example, for final fine-control, or for adjusting the pre-compression in the various tilting directions of the support member as desired.

Still another objection is that the complementary spherical segment, along with the annular element, makes the spring system rather broad as viewed in cross section.

It is an object of the present invention to substantially overcome the above drawbacks and disadvantages. This object is achieved, according to the present invention, by providing that a bottom end of said resilient support member, located opposite its upper end and facing said base plate is omnidirectionally pivotable about its centre line by means of a pivot which is fixed relative to said base plate, and that resilient centring means are provided to cooperate with said resilient support member for radially supporting said resilient support member relative to its fixed pivot, the arrangement being such that when, owing to a shock load, said support member pivots relative to its pivot, said resilient support member can be returned to its starting position.

It is achieved with the invention that, as the resilient support member pivots about the omnidirectional pivot, this support member supports the mass relative to the base plate, while the support member can move into each of its radial directions, but also that the axial and radial resilient supports are separated and can be adjusted independently of each other.

Owing to the use of the fixed pivot, the resilient support member only needs to be centred with the help of the centring means with respect to its radial directions of movement in order to absorb the forces acting on the support member in the radial directions, and this can be realised in a relatively simple manner, and in addition with relatively small centring means, as in fact the weight of the mass can be left substantially out of account.

Thus, in a preferred embodiment, the resilient centring means is an annular resilient element mounted coaxially with said support member and supported relative to said base plate, and which annular element tends to return said resilient support member to its rest position when it has been tilted out of said rest position relative to its pivot.

Preferably, the annular element comprises a circular band spaced around said support member, and a plurality of axially adjustable first centring and biasing means spaced about said band and projecting therefrom to said support member, said centring and biasing means having free ends bearing on the wall of said support member.

Such centring means according to the invention only occupy little space, and are particularly suitable for carrying out a fine control for the radial adjustment after assembly.

In order to make the spring system as compact as possible,, in another preferred embodiment according to the invention, the annular element is a resilient element disposed between the base plate and the bottom end of the support member, with the pivot as its centre. If desired, the resilient annular element can be given a desired pre-compression with the help of axially adjustable second centring and biasing means connected to the support member and arranged between the vertical biasing means and the bottom end of the support member.

For the axial adjustment of the support member with the adjustable centring and biasing means, the omnidirectional pivot, for example, a ball joint, can be made vertically adjustable by adjusting means (for example, a threaded bolt) relative to the base plate.

Some embodiments of the present invention will now be described, by way of example, with reference to the accompanying drawings. In said drawings,

Fig. 1 shows, in axial cross-sectional view, a first embodiment of the spring system according to the invention;

Fig. 2 shows, in axial cross-sectional view, a second embodiment of the spring system;

Fig. 3 shows, in axial cross-sectional view, a third embodiment of the spring system; and

Fig. 4 shows, in axial cross-sectional view, a fourth embodiment of the spring system.

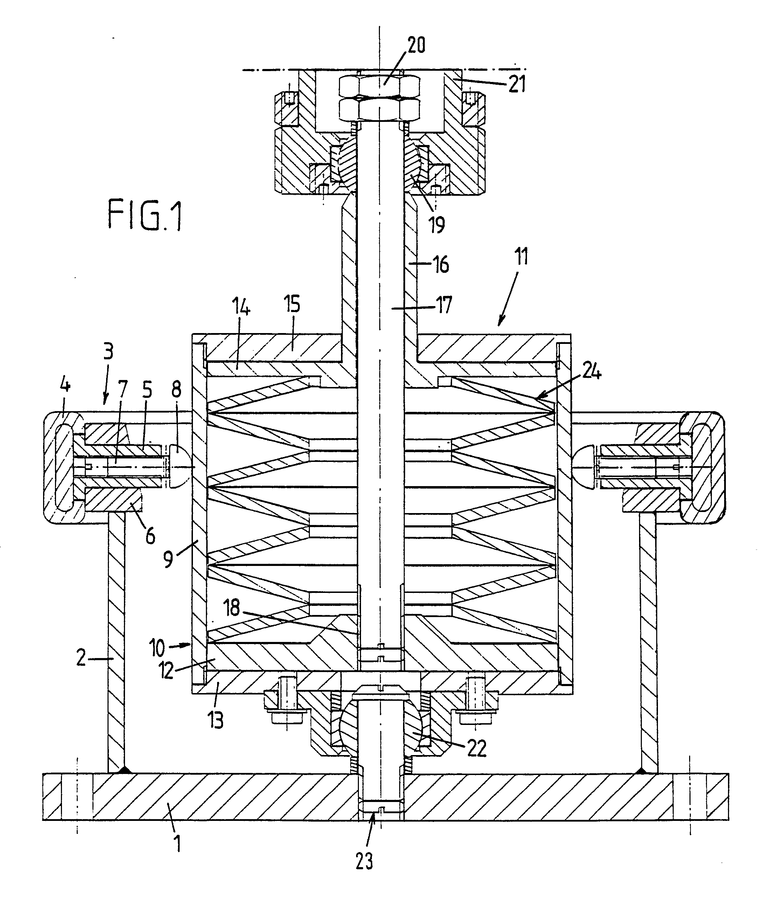

The spring system shown in Fig. 1 comprises a base plate mounting a cylindrical outer housing 2, at the top of which resilient centring means 3 are mounted. The centring means, here formed as an annular element, consist of an annular band 4, to which circumferentially spaced sleeves 5 are secured to extend radially inwardly, which sleeves are slidingly received in a sliding socket 6, which sockets are secured to the top of the outer housing 2. Each of sleeves 5 slidingly mounts a pin 7, the free ends 8 of which bear on the side wall 9 of a cylindrical inner housing 10 located coaxially within the cylindrical outer housing, and forming part of a resilient support member 11.

The resilient support member 11 consists essentially of the cylindrical inner housing or spring housing 10, referred to above, in which a first spring support 12 is slidable up and down within spring housing 10, and in its lowermost position is in contact with a bottom member 13 formed as a bottom cover and, for example, screwed-in at the bottom of the spring housing, and a second spring support 14, also movable up and down within spring housing 10 and, in its uppermost position being in contact with a top member 15 formed as a top cover screwed-in at the top of the spring housing.

This second spring support 14 has an axial sleeve 16 extending centrally through the top cover 15, through which sleeve a guiding shaft 17 extends, around which the sleeve 16 can slide. Shaft 17 has its one end coupled, for example by means of a screw-thread joint 18, to the first spring support 12, while its other end carries an omnidirectional pivot 19 which is slidable along shaft 17, and held in position by means of a collar 20, for example, a nut, and sleeve 16, which is slidable along the shaft. Pivot 19 is a so-called omnidirectional pivot, and is designed for coupling a mass 21, not shown in any detail, which is to be resiliently supported.

The bottom cover 13 of spring housing 10 is coupled to an omnidirectional pivot 22 which is secured about base plate 1 in such a manner that the resilient support member 11 can move omnidirectionally through relatively large angles around pivot 22 without touching base plate 1.

If desired, pivot 10 can be vertically adjusted relative to the base plate by adjusting means 23.

It is clear that the centre lines of pivots 19 and 22 are co-extensive with the axis of guide shaft 17 when the latter is in the rest position.

If desired, pivot 22 can be replaced by a universal joint.

Provided between the two first and second spring supports 12 and 14 is a bi-directional spring 24, which is capable of absorbing axial impact load components. It is clear that this spring 24 can be replaced by any suitable resilient construction, such as a Belleville washer, a helical spring, a pneumatic spring, or a resilient material, for example, rubber, or combinations thereof.

This spring 24 can be mounted between the two spring supports 12 and 14 under a desired pre-compression, while the clearance between the two spring supports and the upper and lower covers 13 and 15 can be reduced to zero by screwing the top or bottom cover 13, 15, or both, into the spring housing 10 or otherwise. If desired, these covers can be welded or clamped to the spring housing, after spring 24 has been placed within the spring housing under a pre-compression. In the case of screwed-in covers 13 and 15, these covers are particularly suitable for fine-control purposes after assembly within the spring housing 10.

To absorb radial impact load components acting on the resilient support member 11, the annular band 4 spaced around spring housing 10 may be made, for example, of a resilient material, for example, rubber, which is given a certain pre-stress sufficient to centre the resilient support member 11 in the desired rest position at a given static radial load. Also, any clearance between the free end 8 of pins 7 and spring housing 10 can be reduced to zero, for example, by screwing the pins into or out of their sleeve 5, as a result of which the support member 11 will become accurately re-positioned after being subjected to a shock load. Owing to the adjustability, corrections can be made in a simple manner, should this be necessary or desirable. By means of the screwed-in pins 7, the pre-stress in band 4 can be accurately adjusted to the desired value. By providing, for example, a separate adjustable bushing (not shown) around sleeves 5 in the outer housing 2, or by providing washers, not shown either, between the head of sleeves 5 and outer housing 2, it is possible to reduce any clearance to zero, and thus to ensure a high precision in the repositioning of support member 11. In other words, the radial counter pressure, distributed over the circumference, can be set at different values, which makes for fine control of the radial spring pressure, in particular after the assembly of the whole spring system.

Instead of being made of a resilient material, the annular band 4 may be made of steel, for example. If desired, this steel band can be secured direct to the outer housing 2, omitting sliding sleeve 6, or can be omitted altogether, in which case the upper end portion of outer housing 2 functions as the steel band, for which purpose sleeves 5 are secured direct to such upper end portion. In these cases, pins 7 may for example be mounted for sliding movement in their relative sleeves 5, while for example an adjustable air pressure or oil pressure can be supplied to the interior of the sleeves. It is also possible to provide a pre-compressed spring in the sleeves. In the simplest case, the centring means 3 may take the form of a pre-stressed resilient annular element secured direct between the top of outer housing 2 and the wall 9 of spring housing 10.

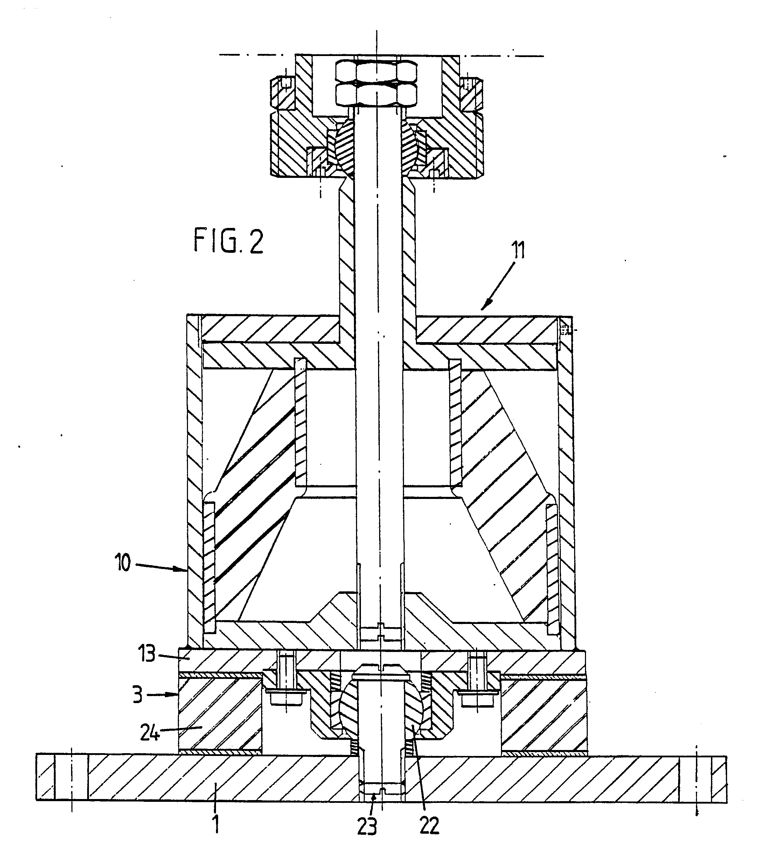

Fig. 2 illustrates an embodiment of the spring system in which the centring means 3 take the form of an annular element 24 of a resilient material, such as rubber, mounted co-axially on spring housing 10 between base plate 1 and the bottom cover 13, and wherein the height of this annular element can be selected so that it is at least equal to the distance between the base plate and the bottom cover. To provide a pre-stress in the resilient material, the height of the annular element may be greater than the distance between the base plate and the bottom cover. It is also possible for the pre-stress to be controlled by the adjusting means 23 for securing and setting the height of pivot 22. If desired, the annular element 24 can be replaced by any other suitable spring construction, for example, helical springs or pneumatic springs.

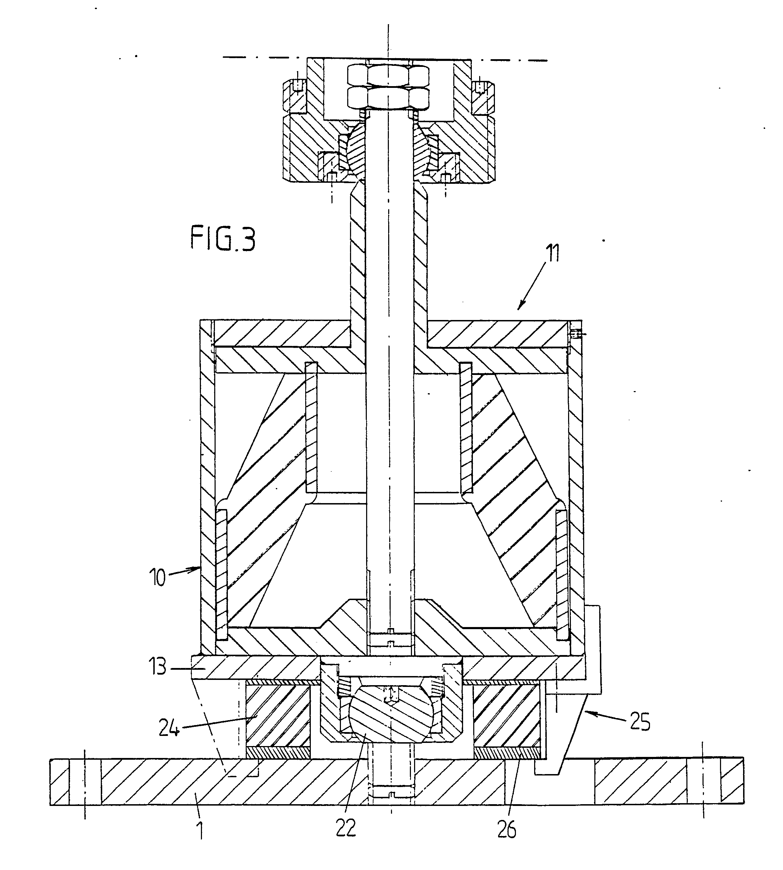

Fig. 3 shows an embodiment identical to that of Fig. 2, except that here the pre-stress in the annular element 24 is provided by axial pre-compression means 25 which, on the one hand, are connected to spring housing 10 and, on the other, confine the annular element 24, under a pre-stress, against bottom cover 13. Care is taken that at least a portion of the annular element continues to rest on base plate 1 to prevent the support member 11 with mass 21 from tilting relative to pivot 22 in their rest position. This can be controlled, for example, by means of a screwed-in ring 26 against the underside of the annular element 24, or by changing the height of pivot 22 relative to base plate 1, for example, by screwing in or out to reduce any clearance between the annular element and the base plate to zero.

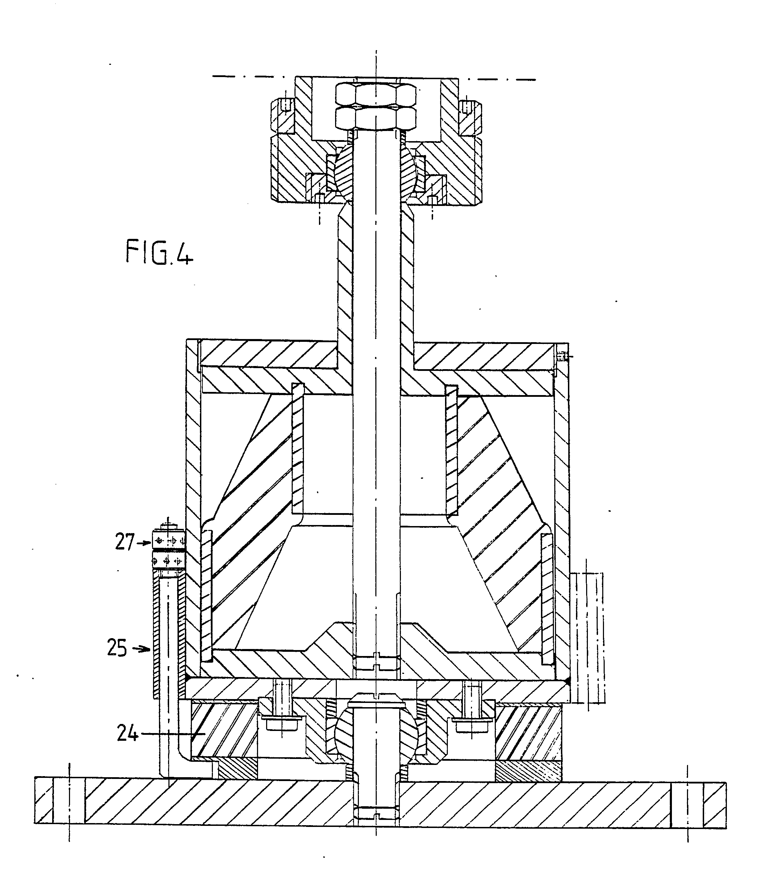

Fig. 4 illustrates a variant of the axial pre-compression means 25, in which the pre-stress in the annular element can be adjusted as desired, for example, after assembly, by adjusting means 27.

It is noted that, as in all embodiments shown, the resilient support member 11 rests on pivot 22, the weight of the mass 21 to be supported is carried by the pivot, so that the centring means 3 only need to absorb the radial impact load components and, accordingly, these centring means can be constructed relatively small, a compact spring construction is possible, and controllable, independent axial and radial values of the acceleration forces on mass 21 become possible.

Claims

1. A spring system for resiliently supporting a mass to be subjected to loads relative to a base plate, said spring system comprising a resilient support member movable between said base plate and said mass, said support member having an upper end movably coupled to said mass, characterized in that the bottom end (13) of said resilient support member (11), located opposite said upper end and facing said base plate (1) is omnidirectionally pivotable about its centre line (17) by means of a pivot which is fixed relative to said base plate (1), and that resilient centring means (3) are provided to cooperate with said resilient support member (11) for radially supporting said resilient support member (11) relative to its fixed pivot (22), the arrangement being such that when, owing to a shock load, said support member pivots relative to its pivot (22), said resilient support member can be returned to its starting position.

2. A spring system as claimed in claim 1, characterized in that said centring means (3) is an annular spring element mounted coaxially with said support member (11) and supported relative to said base plate (1), and which annular element tends to return said resilient support member (11) to its rest position when it has been tilted out of said rest position relative to its pivot (22).

3. A spring system as claimed in claim 2, characterized in that said annular element comprises a circular band (4) spaced around said support member (11), and a plurality of axially adjustable first centring and biasing means (5, 7, 8) spaced about said band and projecting therefrom to said support member, said centring and biasing means having free ends (8) bearing on the wall (9) of said support member (11).

4. A spring system as claimed in claim 3, characterized in that the band consists of a resilient material.

5. A spring system as claimed in claim 3, characterized in that the band (4) is a non-resilient material, and that said first centring and biasing means (5, 7, 8) are adjustable resilient members.

6. A spring system as claimed in claim 2, characterized in that said centering means (3) is an annular element mounted between, and in engagement with, said base plate (1) and the bottom end (13) of said support member (11).

7. A spring system as claimed in claim 6, characterized by second centring and biasing means (25) connected to the support member (11) for giving said annular element (24) an adjustable pre-stress between these vertical biasing means and the bottom end (13) of the support member (11).

8. A spring system as claimed in claim 7, characterized in that the pivot (22) is adjustable in height relative to the base plate (1) by adjusting means (23) for pre-compressing said annular element (24) between the base plate (1) and the bottom end (13) of the support member.

FIG.1

FIG. 2

FIG.3

FIG.4

27 →

25 →

24

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-B-1 231 068 (M.A.N.)<br>* Column 2, line 46 - column 3, line 12; figure 1 *<br>--- | 1-3 | F 16 F  15/04<br>F 16 F  15/00<br>F 16 M   7/00 |
| A,D | NL-A-8 203 630 (LOGGERS)<br>* Whole document *<br>--- | 1,2,6 | |
| A | US-A-3 491 977 (ILLER)<br>* Column 3, line 38 - column 4, line 3; figures 4-7 *<br>--- | 1,2,6 | |
| A | GB-A- 932 439 (LUXEMBOURGEOISE DE BREVETS ET DE PARTICIPATIONS)<br>* Page 2, lines 37-56; figure 3 *<br>--- | 1,2,6 | |
| A | PATENT ABSTRACTS OF JAPAN, vol. 8, no. 112 (M-298)[1549], 25th May 1984; & JP-A-59 19 734 (OODEIOTEKUNIKA K.K.) 01-02-1984<br>--- | 1 | |
| A | NL-A-7 403 393 (REACTOR CENTRUM NEDERLAND)<br>* Page 5, lines 4-14; figure 3 *<br>--- | 1 | TECHNICAL FIELDS SEARCHED (Int. Cl.5) |
| A | US-A-2 935 279 (LA PORTE)<br>* Whole document *<br>--- | 1,2,6 | F 16 F<br>F 16 M |
| A | DE-A-3 616 568 (ARNOLD)<br>* Column 4, lines 29-46; figure 1 *<br>--- | 1 | |
| A | DE-A-3 322 007 (BOSCH)<br>* Whole document *<br>--- | 1-4 | |
| A | DE-C- 682 349 (A.E.G.)<br>* Claim 1; figures 1,2 *<br>---        -/- | 3,4 | |

The present search report has been drawn up for all claims

| Place of search | Date of completion of the search | Examiner |
|---|---|---|
| THE HAGUE | 06-11-1989 | MEIJS P.C.J. |

EPO FORM 1503 03.82 (P0401)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 847 330 (MORRISON) <br> * Column 3, lines 24-34; figures 2,3 * <br> --- | 3,5 | |
| A | DE-A-2 421 952 (PAUL KAHLE ROHRLEITUNGSBAU) <br> * Page 8, paragraph 2 - page 9, paragraph 1; page 9, paragraph 3; figures 3,5 * <br> ----- | 7,8 | |

TECHNICAL FIELDS SEARCHED (Int. Cl.5)

The present search report has been drawn up for all claims

| Place of search | Date of completion of the search | Examiner |
|---|---|---|
| THE HAGUE | 06-11-1989 | MEIJS P.C.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)